# EUROPÄISCHE PATENTSCHRIFT

(11) **EP 1 826 352 B1**
(45) Veröffentlichungstag und Bekanntmachung des Hinweises auf die Patenterteilung: **16.09.2009**
(21) Anmeldenummer: 06003690.2
(22) Anmeldetag: 23.02.2006
(51) Int. Cl.: E05F 15/00, H02H 7/085, B60J 7/057

(54) **Verfahren zum Ansteuern eines Antriebs eines Schiebedachdeckels sowie Schliess- und Öffnungssystem eines Fahrzeugs**
Method for controlling a driving device of a sliding roof and closing and opening system of a vehicle
Procédé pour commander un dispositif d'entraînement d'un panneau de toit ouvrant et dispositif d'ouverture et fermeture d'un véhicule

(43) Veröffentlichungstag der Anmeldung: 29.08.2007
(73) Patentinhaber: ArvinMeritor GmbH, 63128 Dietzenbach (DE)
(72) Erfinder: Heyn, Detlef, 35274 Kirchhain (DE)
(74) Vertreter: Prinz & Partner

(56) Entgegenhaltungen:
- DE-A1- 4 020 351
- DE-C1- 19 615 127
- US-A- 6 008 607
- US-B1- 6 219 599
- US-B1- 6 472 836

## Beschreibung

Die Erfindung betrifft ein Schließ- und Öffnungssystem eines Fahrzeugs. Ferner betrifft die Erfindung ein Verfahren zum Ansteuern eines Antriebs eines Deckels eines Fahrzeugschiebe dachsystems nach dem Oberbegriff des Anspruchs 1.

Unter dem Begriff "Schließ- bzw. Öffhungssystem" wird ein Schiebedachsystem verstanden.

Bei bekannten Schiebedachsystemen kann ein Deckel eine Dachöffnung vollständig oder teilweise freigeben, da er verschiebbar an einem Führungsschienensystem angebracht ist. Ferner kann der Deckel eine Lüfterstellung einnehmen, indem er mit seinem hinteren Ende ausgestellt wird.

In modernen Schiebedachsystemen ist eine Einklemmschutzfunktion integriert. Zur Realisierung des Einklemmschutzes wird z.B. beim Verschieben des Deckels die Leistung des Antriebs gemessen. Sobald eine bestimmte Leistung überschritten wird, interpretiert ein Steuergerät des Systems, daß der Deckel auf ein Hindernis gestoßen ist, und der Antrieb des Deckels stoppt. Das Steuergerät hat also angenommen, daß der dem Antrieb entgegengesetzte Widerstand auf ein Hindernis zurückzuftihren war.

Ein solch erhöhter Widerstand ist jedoch auch auf höhere Fahrzeuggeschwindigkeiten und geschlossene Seitenfenster zurückzuführen, da ein im Fahrzeuginnenraum herrschender Druck von der Anzahl der geschlossenen/geöffneten Seitenfenster, des Öffnungsgrades derselben und der Fahrzeuggeschwindigkeit abhängt. Beim Schließen des Deckels muß der Antrieb bei höheren Fahrzeuggeschwindigkeiten und geschlossenen Seitenfenstern mit einer erhöhten Leistung betrieben werden. Das Steuergerät kann so bei Überschreitung einer bestimmten Leistung des Antriebs fälschlicherweise interpretieren, daß der Deckel auf ein Hindernis gestoßen ist, und den Antrieb des Deckels stoppen, obwohl der erhöhte Verschiebewiderstand durch den geänderten Fahrzeuginnendruck zustande kommt.

Bei einer niedrigen Fahrzeuggeschwindigkeit und geöffneten Seitenfenstern hingegen ist nur eine geringe Leistung des Antriebs zum Verschieben des Deckels notwendig, so daß ein Hindernis dem Deckel einen vergleichsweise hohen Widerstand entgegensetzen muß und den Antrieb vergleichsweise spät stoppt.

Aus der DE 196 15 127 C1 ist zur Berücksichtigung unterschiedlicher Druckverhältnisse ein von einem Luftdrucksensor gebildetes Luftdrucksignal bekannt. In Abhängigkeit von diesem Luftdrucksignal wird dann ein Grenzwert der Schließkraftbegrenzung eines Schiebedaches korrigiert. Nachteilig daran ist, daß zur Ermittlung des Luftdruckes im Fahrzeuginnenraum ein Luftdrucksensor notwendig ist, wodurch zusätzliche Kosten anfallen.

Aus der gattungsgemäßen US 6 219 599 B1 ist ein Verfahren zum Ansteuern des Schiebedachdeckelantriebes bekannt, bei dem der Einklemmschutzparameter von der Fahrzeuggeschwindigkeit abhängt.

Die US 6 472 836 B1 beschreibt einen variablen Einklemmschutz für die Seitenscheiben und das Schiebedach, dessen Parameter davon abhängt, ob der Fahrzeugmotor angelassen ist oder nicht. In einer zweiten Ausführungsform hängt der Parameter davon ab, ob das Fahrzeug steht oder sich bewegt.

Um die Schließkraft z.B. der Seitenscheiben möglichst gering und gleichmäßig zu halten, schlägt die US 6 008 607 vor, den Innenraum beim Schließen zu belüften, indem das Schiebedach oder die Luftklappen der Klimaanlage geöffnet werden.

Die Aufgabe der Erfindung besteht darin, ein Verfahren zum Ansteuern eines Antriebs des Schiebedachdeckels zu schaffen, bei dem der Einklemmschutz zuverlässig anspricht und zudem kostengünstig ist.

Diese Aufgabe wird durch Anspruch 1 gelöst.

Die Erfindung sieht ein Verfahren vor, das u.a. folgende Schritte umfaßt:
- Einspeisen wenigstens eines für einen fahrzeugsensitiven, variablen Datenwert spezifischen Signals in Form der Fahrzeuggeschwindigkeit in das Steuergerät,
- Bestimmen eines situationsspezifischen Einklemmschutzparameters in Abhängigkeit vom wenigstens einen Signal, und
- Betreiben des Einklemmschutzes mit dem Einklemmschutzparameter.

Die Erfindung beruht auf dem Grundgedanken, einen fahrzeugsensitiven, variablen Datenwert über ein Signal in das Steuergerät des vom Antrieb bewegten Deckels einfließen zu lassen und den Einklemmschutz mit unterschiedlichen Einklemmschutzparametern zu betreiben. Der Betrieb des Einklemmschutzes ändert sich so in Abhängigkeit von dem jeweiligen, ermittelten fahrzeugsensitiven, variablen Datenwert. Als "fahrzeugsensitiver, variabler Datenwert" wird hier ein Wert verstanden, der über den momentanen Zustand des Fahrzeugs und nicht seiner Umgebung oder seines Innenraums eine Aussage trifft. In Abhängigkeit von dem Signal wird ein Einklemmschutzparameter bestimmt, mit dem das Steuergerät den Einklemmschutz betreibt. Der Einklemmschutz wird also mit unterschiedlichen Einklemmschutzparametern betrieben, so daß beispielsweise bei einer höheren Fahrzeuggeschwindigkeit, bei der der Antrieb beim Verstellen eine bestimmte Leistung überschreitet, das Steuergerät nicht fälschlicherweise davon ausgeht, daß sich ein Hindernis im Weg des zu verstellenden Bauteils (z.B. eines Deckels eines Schiebedachsystems oder eines Seitenfensters) befindet, und den Antrieb unnötigerweise stoppt. Die Einklemmschutzparameter werden z.B. für jedes Fahrzeugmodel und jede mögliche Betriebssituation (Fahrzeuggeschwindigkeit, Öffnungszustand eines Fensters usw.) empirisch ermittelt und im Steuergerät gespeichert. Das Steuergerät kann den Betrieb des Einklemmschutzes ohne zusätzlichen Sensor an die unterschiedlichen Betriebssituationen anpassen.

Je größer die Fahrzeuggeschwindigkeit ist, desto mehr Leistung muß der Antrieb beim Verstellen aufbringen.
Der Antrieb muβ beim Schließen einer Dachöffnung mehr Leistung aufbringen, da eine größere Windlast auf einen Deckel wirkt und somit dem Antrieb ein größerer Widerstand entgegengesetzt ist.

Zusätzlich geht aber noch der Öffnungszustand der Seitenfenster und/oder die Gebläsestellung der Innenraumbelüftung in dis Parameterbestimmung ein. Der Antrieb eines Deckels muβ Z.B. bei geschlossenen Seitenfenstern eine größere Leistung aufbringen als bei geöffneten Seitenfenstern, da der Luftdruck im Fahrzeuginnenraum größer ist.

Einen ähnlichen Einfluß wie der Öffnungszustand des Schließ- und Öffnungs- systems hat die Gebläsestellung der Innenraumbelüftung, die optional ein fahrzeugsensitiver Datenwert ist. Bei großer Gebläseleistung muß der Antrieb des Schließ- und Öffnungssystems wegen eines Druckausgleichs von Innenraum zum Fahrzeugäußeren eine geringere Leistung aufbringen als bei abgestelltem Gebläse.

Die Erfindung betrifft ferner ein Schließ- und Öffnungssystem eines Fahrzeugs mit einem Steuergerät eines Einklemmschutzes, das mit einem Antrieb des Schiebedachdeckels gekoppelt ist, wobei das Steuergerät einen Eingang für mehrere Signal basierend auf einem variablen, fahrzeugsspezifischen Datenwert in Form der Fahrzeuggeschwindigkeit hat, und wobei das Steuergerat so ausgebildet ist, daß es abhängig auch von weiteren Signalen (Seitenfenster und/oder Gebläsestellung) einen situationsspezfischen Einklemmschutzparameter bestimmt und auf dessen Basis den Antrieb situationsspezifisch ansteuert. Hinsichtlich der Vorteile wird auf die obigen Erläuterungen verwiesen.

Vorzugsweise ist das Steuergerät zum Erhalt des Datenwertes mit einer elektrischen Fahrzeugsteuereinheit gekoppelt. Eine solche Fahrzeugsteuereinheit ist bereits in Fahrzeugen vorgesehen und muß folglich nur mit einer erweiterten Software betrieben werden.

Weitere Merkmale und Vorteile der Erfindung ergeben sich aus der nachfolgenden Beschreibung und den Zeichnungen. Die Erfindung wird anhand einer Ausfbhrungsform beschrieben. In den Zeichnungen zeigen:
- Figur 1 eine schematische Perspektivansicht eines Fahrzeugs mit einem erfindungsgemäßen Schließ- und Öffnungssystem,
- Figur 2 ein logisches Blockschaltbild des erfindungsgemäßen Schließ- und Öffnungssystems, und
- Figur 3 ein Flußdiagramm des erfindungsgemäßen Verfahrens zum Ansteuern des Antriebs des Schiebedachdeckels.

Die Erfindung betrifft ein Schließ- und Öffnungssysteme für Fahrzeuge, genauer gesagt Schiebedachsysteme.

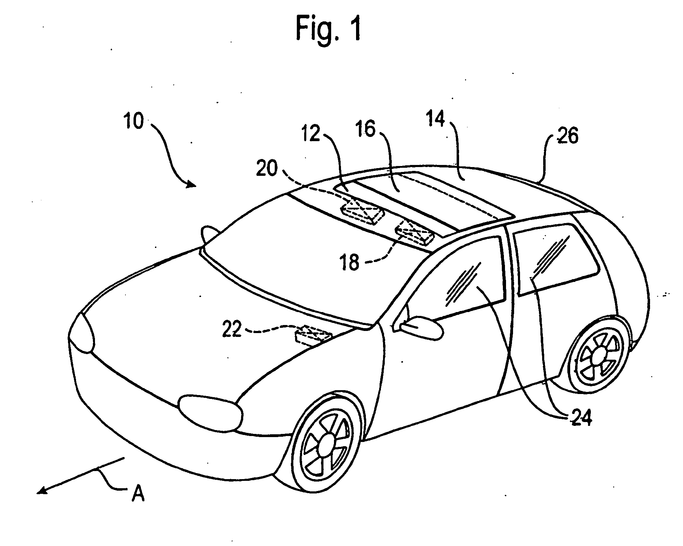

In Figur 1 ist ein Fahrzeug 10 mit einem Schiebedachsystem gezeigt. Das Schiebedachsystem weist eine Dachöffnung 12 in einem festen Dachteil 14 auf. Die Dachöffnung 12 kann durch einen in Fahrzeuglängsrichtung A verschiebbaren Deckel 16 freigelegt werden, indem der Deckel 16 in bekannter Weise von einem schematisch gezeigten Antrieb 18 aus einer geschlossenen Stellung in eine geöffnete Stellung und zurück überführt wird. Dabei kann der Deckel 16 über die Außenhaut des festen Dachteils 14 oder auch unter die Außenhaut verschoben werden. Alternativ zu einem einzelnen Deckel 16 können auch mehrere Deckel vorhanden sein (nicht gezeigt).

Der Antrieb 18 ist mit einem schematisch gezeigten Steuergerät 20 eines Einklemmschutzes über ein an sich bekanntes Bussystem (nicht gezeigt) gekoppelt. Das Steuergerät 20 ist z.B. in das Dachteil 14 integriert und so ausgebildet, daß es einen Eingang für ein Signal hat, auf das im folgenden eingegangen wird.

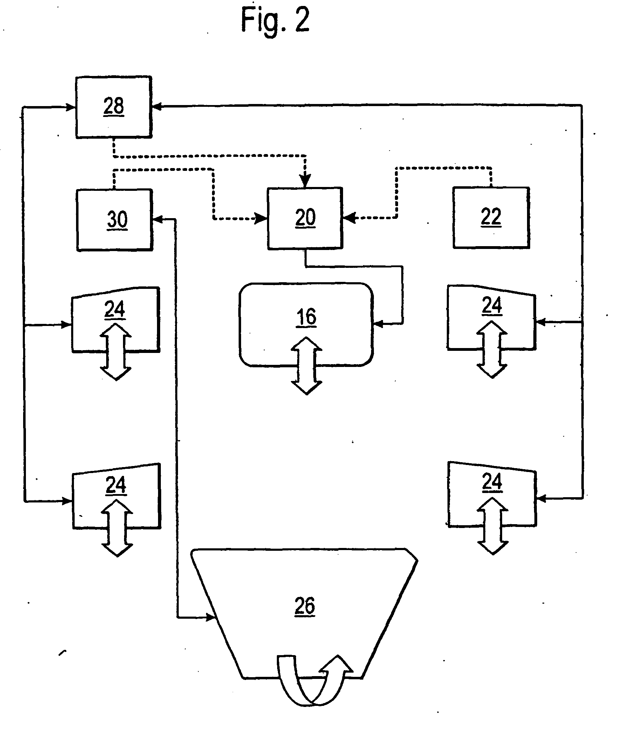

An einem vorderen Abschnitt des Fahrzeugs 10 ist eine elektrische Fahrzeugsteuereinheit 22 angeordnet, die über ein Bussystem mit dem Steuergerät 20 gekoppelt ist (Figur 2). Ein Seitenfenstersteuergerät 28 und gegebenenfalls ein Heckklappensteuergerät 30 sind ebenfalls über ein Bussystem mit dem Steuergerät 20 verbunden.

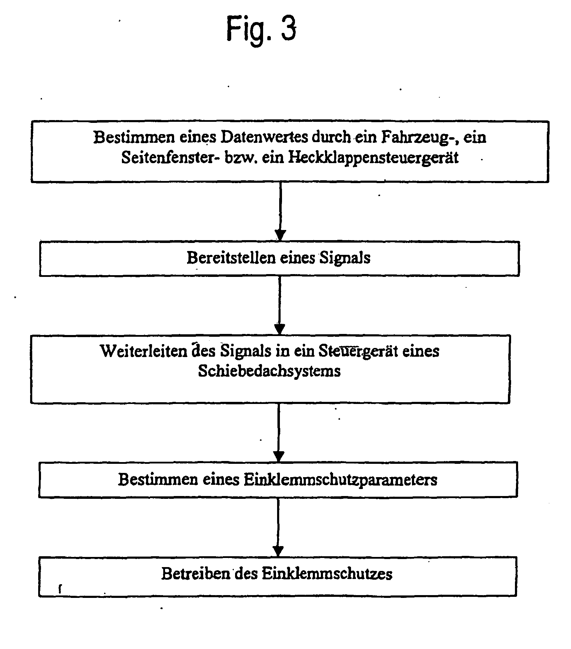

Im folgenden wird auf das Verfahren zum Ansteuern des Antriebs 18 des Schiebedachsystems eingegangen, das in Figur 3 dargestellt ist.

Fahrzeugsensitive, variable Datenwerte wie die Fahrzeuggeschwindigkeit und die die Gebläsestellung und/oder des öffnungezustand des Seitenscheiben werden in der Fahrzeugsteuereinheit 22 in ein Signal umgewandelt. Das spezifische Signal wird anschließend an das Steuergerät 20 weitergeleitet und dort eingespeist. Vom Seitenfenstersteuergerät 28 und vom Heckklappensteuergerät 30 wird optional ebenfalls jeweils ein Signal, das spezifisch den augenblicklichen Öffnungszustand eines Seitenfensters 24 oder einer Heckklappe 26 beinhaltet, zum Steuergerät 20 geleitet. Zusätzlich zu den fahrzeugsensitiven Datenwerten kann auch die Temperatur, die Luftfeuchte oder ein Fahrzeuginnendruck das ermittelte und zum Steuergerät 20 geleitete Signal beeinflussen.

In Abhängigkeit von dem Signal wird ein situationsspezifischer Einklemmschutzparameter bestimmt und der Einklemmschutz des Schiebedachsystems mit dem angepaßten Einklemmschutzparameter betrieben, so daß eine höhere Fahrzeuggeschwindigkeit und geschlossene/geöffnete Seitenfenster 24 beim Verstellen des Deckels 16 berücksichtigt werden. Die Einklemmschutzparameter sind für das vorhandene Fahrzeugmodel und jede mögliche Betriebssituation (Fahrzeuggeschwindigkeit, Öffnungszustand der Seitenfenster usw.) empirisch ermittelt und im Steuergerät 20 gespeichert worden.

Fahrzeugsensitive Werte und somit die im Fahrzeuginnenraum vorhandenen Druckverhältnisse werden also beim Verstellen des Deckels 16 berücksichtigt, so daß der Einklemmschutz zuverlässiger betrieben wird. Der Antrieb 18 stoppt nicht unnötigerweise, wenn das Steuergerät 20 fälschlicherweise davon ausgeht, daß sich ein Hindernis im Weg des Deckels 16 befindet, da sich die Leistung des Antriebs 18 beim Verschieben des Deckels 16 aufgrund eines geschlossenen Seitenfensters 24 oder einer erhöhten Fahrzeuggeschwindigkeit erhöht hat. Auch stoppt der Antrieb 18 des Schiebedachsystems nicht vergleichsweise spät, da bei geöffneten Seitenfenstern 24 eine geringe Leistung des Antriebs 18 beim Verstellen des Deckels 16 notwendig ist.

Genausogut könnte das Steuergerät mehrere Schließ- und Öffnungssysteme mit dem situationsspezifischen Einklemmschutzparameter betreiben (nicht gezeigt). Auch könnte ein zweiter verstellbarer Deckel an das Steuergerät gekoppelt sein oder beim Verstellen eines ersten Deckels der Öffnungszustand des zweiten Deckels berücksichtigt werden.

## Patentansprüche

1. Verfahren zum Ansteuern eines Antriebs (18) wenigstens eines Deckels (16) eines Fahrzeugschiebedachsystems (10), mit einem Steuergerät (20) eines Einklemmschutzes, das mit dem Antrieb (18) gekoppelt ist, **gekennzeichnet durch** folgende Schritte:
- Einspeisen eines für einen fahrzeugsensitiven, variablen Datenwert spezifischen Signals in das Steuergerät (20), wobei der fahrzeugspezifische Datenwert die Fahrzeuggeschwindigkeit ist,
- Bestimmen eines situationsspezifischen Einklemmschutzparameters in Abhängigkeit vom wenigstens einen Signal, und
- Betreiben des Einklemmschutzes mit dem Einklemmschutzparameter,
**dadurch gekennzeichnet, daß**
als zusätzlicher fahrzeugsensitiver Datenwert der Öffnungszustand der Seitenfenster (24) und/oder eine Gebläsestellung der Innenraumbelüftung in die Bestimmung des Einklemmschutzparameters eingehen.

2. Verfahren nach einem der vorhergehenden Ansprüche, **dadurch gekennzeichnet, daß** das Steuergerät (20) Teil eines Schiebedachsystems ist.

3. Verfahren nach einem der vorhergehenden Ansprüche, **dadurch gekennzeichnet, daß** das Steuergerät (20) Teil eines Fensterhebersystems ist.

4. Verfahren nach einem der vorhergehenden Ansprüche, **dadurch gekennzeichnet, daß** das Steuergerät (20) mehrere Schließ- und Öffnungssysteme steuert.

5. Verfahren nach einem der vorhergehenden Ansprüche, **dadurch gekennzeichnet, daß** die Einklemmschutzparameter für das Fahrzeugmodel und jede Betriebssituation empirisch ermittelt und im Steuergerät gespeichert werden.

6. Schließ- und Öffnungssystem eines Fahrzeugs (10), mit einem Steuergerät (20) eines Einklemmschutzes, das mit einem Antrieb (18) eines Fahrzeugschiebedachsystems (10) gekoppelt ist, wobei das Steuergerät (20) einen Eingang für wenigstens ein Signal basierend auf einem variablen, fahrzeugspezifischen Datenwert in Form der Fahrzeuggeschwindigkeit aufweist und so ausgebildet ist, daß es abhängig vom Signal einen situationsspezifischen Einklemmschutzparameter bestimmt und auf dessen Basis den Antrieb (18) eines Deckels (16) des Schiebedachsystems situationsspezifisch ansteuert, **dadurch gekennzeichnet, daß** das Steuergerät (20) zusätzlich Teil des Fensterhebersystems ist und es als zusätzliche fahrzeugsensitive Datenwerte den Öffnungszustand der Seitenfenster (24) und/oder eine Gebläsestellung der Innenraumbelüftung erhält, zur Berücksichtigung bei der Bestimmung des Einklemmschutzparameters .

7. Schließ- und Öffnungssystem nach Anspruch 6, **dadurch gekennzeichnet, daß** das Steuergerät (20) zum Erhalt des Datenwertes mit einer elektrischen Fahrzeugsteuereinheit (22) gekoppelt ist.

## Claims

1. Method for controlling a drive (18) of at least one cover (16) of a vehicle sliding roof system (10), having a control device (20) of an anti-trapping means which is coupled to the drive (18), **characterized by** the following steps:
- a specific signal for a vehicle-sensitive, variable data value is fed into the control device (20), wherein the vehicle-specific data value is the velocity of the vehicle,
- a situation-specific anti-trapping parameter is determined as a function of at least one signal, and
- an anti-trapping means is operated with the anti-trapping parameter,
**characterized in that**
the opening state of the side windows (24) and/or a blower setting of the passenger compartment ventilation means are included as additional vehicle-sensitive data values in the determination of the anti-trapping parameter.

2. Method according to one of the preceding claims, **characterized in that** the control device (20) is part of a sliding roof system.

3. Method according to one of the preceding claims, **characterized in that** the control device (20) is part of a window lifter system.

4. Method according to one of the preceding claims, **characterized in that** the control device (20) controls a plurality of closing and opening systems.

5. Method according to one of the preceding claims, **characterized in that** the anti-trapping parameters for the vehicle model and any operating situation are acquired empirically and stored in the control device.

6. Closing and opening system of a vehicle (10), having a control device (20) of an anti-trapping means which is coupled to a drive (18) of a vehicle sliding roof system (10), wherein the control device (20) has an input for at least one signal based on a variable, vehicle-specific data value in the form of the velocity of the vehicle, and is embodied in such a way that it determines a situation-specific anti-trapping parameter as a function of the signal, and controls the drive (18) of a cover (16) of the sliding roof system on the basis of said anti-trapping parameter, **characterized in that** the control device (20) is additionally part of the window lifter system and said control device (20) receives, as additional vehicle-sensitive data values, the opening state of the side windows (24) and/or a blower setting of the passenger compartment ventilation means, to be taken into account in the determination of the anti-trapping parameter.

7. Closing and opening system according to Claim 6, **characterized in that** the control device (20) is coupled to an electrical vehicle control unit (22) in order to receive the data value.

## Revendications

1. Procédé pour commander un dispositif d'entraînement (18) d'au moins un panneau (16) d'un système de toit ouvrant de véhicule (10), avec un appareil de commande (20) d'une protection contre le coincement, lequel est couplé à l'entraînement (18), **caractérisé par** les étapes suivantes:
- introduction d'un signal spécifique d'une valeur de donnée variable sensible au véhicule dans l'appareil de commande (20), dans lequel la valeur de donnée spécifique du véhicule est la vitesse du véhicule,
- détermination d'un paramètre de la protection contre le coincement spécifique d'une situation en fonction d'au moins un signal, et
- commande de la protection contre le coincement avec le paramètre de la protection contre le coincement,
**caractérisé en ce que**, comme valeur de donnée supplémentaire sensible au véhicule, on utilise l'état d'ouverture des fenêtres latérales (24) et/ou une position du ventilateur d'aération de l'habitacle dans la détermination du paramètre de la protection contre le coincement.

2. Procédé selon la revendication précédente, **caractérisé en ce que** l'appareil de commande (20) fait partie d'un système de toit ouvrant.

3. Procédé selon l'une quelconque des revendications précédentes, **caractérisé en ce que** l'appareil de commande (20) fait partie d'un système de lève-glace électrique.

4. Procédé selon l'une quelconque des revendications précédentes, **caractérisé en ce que** l'appareil de commande (20) commande plusieurs systèmes de fermeture et d'ouverture.

5. Procédé selon l'une quelconque des revendications précédentes, **caractérisé en ce que** les paramètres de la protection contre le coincement sont déterminés empiriquement pour le modèle de véhicule et pour chaque situation de fonctionnement, et sont stockés dans l'appareil de commande.

6. Système de fermeture et d'ouverture d'un véhicule (10), comportant un appareil de commande (20) d'une protection contre le coincement, lequel est couplé à un entraînement (18) d'un système de toit ouvrant de véhicule (10), dans lequel l'appareil de commande (20) présente une entrée pour au moins un signal basé sur une valeur de donnée variable spécifique du véhicule sous la forme de la vitesse du véhicule et est réalisé de telle manière qu'il détermine un paramètre de la protection contre le coincement spécifique de la situation et qu'il commande, sur la base de celui-ci, l'entraînement (18) d'un panneau (16) du système de toit ouvrant, **caractérisé en ce que** l'appareil de commande (20) fait en outre partie d'un système de lève-glace électrique et **en ce qu'**il reçoit, comme valeurs de donnée supplémentaires spécifiques du véhicule, l'état d'ouverture des fenêtres latérales (24) et/ou la position du ventilateur d'aération de l'habitacle, afin qu'ils soient pris en compte lors de la détermination du paramètre de la protection contre le coincement.

7. Système de fermeture et d'ouverture selon la revendication 6, **caractérisé en ce que** l'appareil de commande (20) est couplé à une unité de commande électrique (22) du véhicule pour la réception de la valeur de donnée.
